# EUROPÄISCHE PATENTANMELDUNG

(11) **EP 1 715 003 A1**
(43) Veröffentlichungstag der Anmeldung: **25.10.2006**
(21) Anmeldenummer: 06006665.1
(22) Anmeldetag: 30.03.2006
(51) Int. Cl.: C08L 63/00, C08K 3/36, C08K 9/06

(54) **Schlagzähe Epoxidharz-Zusammensetzungen**

(30) Priorität: 21.04.2005 DE 102005018671
(71) Anmelder: Henkel Kommanditgesellschaft auf Aktien, 40589 Düsseldorf (DE); Sustech GmbH & Co. KG, 64287 Darmstadt (DE)
(72) Erfinder: Bedford, Oliver, 64372 Ober-Ramstadt (DE); Garnault, Anne-Marie, 58200 Alligny-Cosne (FR)

(57) **Zusammenfassung**

Einkomponentige, wärmehärtende Klebstoff-Zusammensetzungen auf der Basis mindestens eines bei Raumtemperatur flüssigen Epoxidharzes auf der Basis von Diclycidylethern des Bisphenols A und/oder F mindestens eines Copolymers mit einer Glasübergangstemperatur kleiner oder gleich -30°C und gegenüber Epoxiden reaktiven Gruppen, sowie mindestens einem wärmeaktivierbaren Härter und/oder Beschleuniger sowie mindestens ein Organosilan-modifiziertes Siliciumdioxid-Sol eignen sich zur Herstellung schlagzäher Klebungen von metallischen Substraten und ergeben hochfeste, verschweißbare Klebungen mit guter Alterungsbeständigkeit.

## Beschreibung

Die vorliegende Erfindung betrifft schlagzähe beziehungsweise schlagfeste Epoxidharz-Zusammensetzungen aus Epoxidharzen sowie speziellen Copolymeren mit einer Glasübergangstemperatur von -30°C oder niedriger, wärmeaktivierbaren Härtern und/oder Beschleunigern sowie modifizierten Siliciumdioxid-Solen. Die Erfindung betrifft ferner ein Verfahren zur Herstellung dieser Zusammensetzungen sowie deren Verwendung als wärmehärtbaren Klebstoff.

Reaktive Klebstoffe auf Epoxidbasis sind bekannt. Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Verklebungen mit hohen Anforderungen an die Festigkeit werden in großem Umfang Epoxidklebstoffe eingesetzt, insbesondere als heißhärtende, einkomponentige Klebstoffe, die häufig auch als reaktive Schmelzklebstoffe formuliert werden. Reaktive Schmelzklebstoffe sind dabei Klebstoffe, die bei Raumtemperatur fest sind und bei Temperaturen bis zu etwa 80 bis 90°C erweichen und sich wie ein thermoplastisches Material verhalten. Erst bei höheren Temperaturen ab etwa 100°C werden die in diesen Schmelzklebstoffen vorhandenen latenten Härter thermisch aktiviert, so daß eine irreversible Aushärtung zu einem Duroplasten erfolgt. Zum Fügen der Bauteile, z. B. in der Fahrzeugindustrie, wird der Klebstoff zunächst warm auf mindestens eine Substratoberfläche aufgebracht, die zu verbindenden Bauteile werden dann gefügt. Beim Abkühlen erstarrt der Klebstoff dann und schafft durch dieses physikalische Erstarren eine ausreichende Handhabungsfestigkeit, d. h. eine vorläufige Verbindung. Die so miteinander verbundenen Bauteile werden in den verschiedenen Wasch-, Phosphatier- und Tauchlack-Bädern weiter behandelt. Erst anschließend wird der Klebstoff in einem Ofen bei höheren Temperaturen gehärtet.

Konventionelle Klebstoffe und Schmelzklebstoffe auf Basis von Epoxidharzen sind in ausgehärtetem Zustand hart und spröde. Die mit Ihnen erhaltenen Klebungen weisen zwar in aller Regel eine sehr hohe Zugscherfestigkeit auf. Bei schälender, schlagender oder schlagschälender Beanspruchung, insbesondere bei tieferen Temperaturen platzen diese jedoch ab, so daß es bei dieser Beanspruchungsart der Klebefuge leicht zum Bindungsverlust kommt. Es hat daher bereits zahlreiche Vorschläge gegeben, Epoxidharze durch flexible Zusätze so zu modifizieren, daß ihre Sprödigkeit deutlich reduziert wird. Ein gängiges Verfahren beruht auf der Verwendung spezieller Kautschukaddukte an Epoxidharze, die als heterodisperse Phase in der Epoxidharzmatrix eingelagert sind, so daß die Epoxide schlagfester werden, diese Epoxidharz-Zusammensetzungen werden auch als "Toughened" bezeichnet. Eine gängige, bekannte Modifizierung von Epoxidharzen der vorgenannten Art besteht in der Umsetzung eines Polybutadien-Co-Acrylnitrilcopolymers mit Carboxyl-Endgruppen mit einem Epoxidharz. Dieses Kautschuk-Epoxidaddukt wird dann in einem oder mehreren unterschiedlichen Epoxidharzen eindispergiert. Dabei muß die Reaktion des Epoxidharzes mit dem carboxylgruppenhaltigen Butadien-Acrylnitrilkautschuk so geführt werden, daß es nicht zu einer vorzeitigen Aushärtung des Adduktes führt. Obwohl derartig modifizierte Epoxidharz-Zusammensetzungen in bezug auf ihre Schlagfestigkeit bereits eine deutliche Verbesserung gegenüber den unmodifizierten Epoxidharzen darstellen, ist ihr Verhalten gegenüber schälenden bzw. schlagschälenden Beanspruchungen immer noch nicht ausreichend.

Aus der EP-A-0 343 676 sind Schmelzklebstoffzusammensetzungen bekannt, die aus einem Gemisch von mehreren Epoxidharzen, einem phenolischen Harz sowie einem Polyurethan-Epoxidaddukt zusammengesetzt sind. Das darin enthaltene Polyurethan-Epoxidaddukt besteht aus einem Umsetzungsprodukt von mehreren Polyalkylenglykolhomo- und Copolymeren mit primären und sekundären OH-Gruppen, einem Diisocyanat und mindestens einem Epoxidharz. Es wird angegeben, daß diese Schmelzklebstoffzusammensetzung gegenüber verschiedenen, kommerziellen einkomponentigen Schmelzklebstoffzusammensetzungen in ihrer Scherfestigkeit, Schälfestigkeit und Schlagfestigkeit verbessert sind, über die Klebstoffeigenschaften der ausgehärteten Klebefuge bei tiefen Temperaturen werden keine Angaben gemacht.

Die US-A-5 290 857 beschreibt eine Epoxidharzklebstoffzusammensetzung enthaltend ein Epoxidharz sowie ein pulverförmiges Kern/Schalepolymer und einen wärmeaktivierbaren Härter für das Epoxidharz. Das pulverförmige Kern/Schalepolymer ist zusammengesetzt aus einem Kern enthaltend ein Acrylat- oder Methacrylatpolymer mit einer Glasübergangstemperatur von -30°C oder niedriger und einer Schale enthaltend ein Acrylat- oder Methacrylatpolymer, das vernetzende Monomereinheiten enthält und dessen Glasübergangstemperatur größer oder gleich 70°C ist, wobei das Gewichtsverhältnis des Kerns zur Schale im Bereich zwischen 10:1 bis 1:4 liegt. Es wird angegeben, daß diese Zusammensetzungen ausgezeichnete Klebstoffeigenschaften wie Schlagfestigkeit, Zugscherfestigkeit und T-Schälfestigkeit haben und außerdem eine gute partielle Gelierbarkeit besitzen. Angaben über die Eigenschaften von Verklebungen mit diesen Klebstoffen bei tiefen Temperaturen werden nicht gemacht.

In analoger Weise beschreibt die US-A-5 686 509 eine adhäsionsverstärkende Zusammensetzung für Epoxidharze bestehend aus pulverförmigen Copolymerteilchen, die ionisch mit einem mono- oder divalenten Metallkation vernetzt sind. Dabei ist der Kernbereich des Kern/Schalepolymers aus einem Dienmonomer und gegebenenfalls vernetzenden Monomereinheiten zusammengesetzt, der eine Glasübergangstemperatur kleiner oder gleich -30°C hat. Das Schalencopolymer hat eine Glasübergangstemperatur von mindestens 70°C und ist aus Acrylat oder Methacrylat-Monomereinheiten und radikalisch polymerisierbare ungesättigte Carbonsäureeinheiten zusammengesetzt. Die Klebstoffzusammensetzung soll dabei auf 100 Teile Epoxidharz 15 bis 60 Gewichtsteile des adhäsionsverstärkenden Copolymerpulvers und 3 bis 30 Gewichtsteile eines hitzeaktivierbaren Härtungsagens haben.

Weiterhin sollen die Zusammensetzungen gemäß der Lehre dieser Schrift Weichmacher in Form von aliphatischen und/oder aromatischen Phosphorsäure-Triestern enthalten, um die Klebkraft zu erhöhen. Als Füllstoffe schlägt diese Schrift feinteilige Calciumcarbonate oder Siliciumdioxid mit einem Teilchendurchmesser von 0,1 µm vor. Diese Zusammensetzungen werden zur Anwendung als Strukturklebstoffe für Automobilteile empfohlen. Diese Schrift macht keine Angaben darüber, ob die vorgeschlagenen Epoxidharz-Zusammensetzungen als einkomponentige heißhärtende Klebstoffe einsetzbar sind. Angaben über die Tieftemperatureigenschaften derartiger Verklebungen werden nicht gemacht.

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, daß diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rißfortpflanzungsbeständigkeit haben können.

WO 00/20483 beschreibt schlagfeste Epoxidharz-Zusammensetzungen, die neben üblichen flüssigen und/oder festen Polyepoxiden und üblichen Härtern und Beschleunigern sowie gegebenenfalls Füllstoffen und Rheologiehilfsmitteln, Kondensationsprodukte aus Carbonsäuredianhydriden, Di- oder Polyaminen und Polyphenolen oder Aminophenolen bzw. deren Umsetzungsprodukte mit Epoxidharzen enthalten. Diese Zusammensetzungen sollen sich als schlagfeste, schlagschälfeste und schälfeste Klebstoffe im Fahrzeugbau und Elektronik eignen, insbesondere bei sehr tiefen Temperaturen sollen diese Klebstoffe sehr gute Schlag-Schäl-Eigenschaften aufweisen.

Die WO 00/37554 schlägt Epoxidharz-Zusammensetzungen aus mindestens einem Epoxidharz und latenten Härtern vor. Weiterhin sollen diese Zusammensetzungen mindestens ein Copolymer mit einer Glasübergangstemperatur von -30°C oder niedriger und gegenüber Epoxiden reaktiven Gruppen enthalten oder ein Reaktionsprodukt dieses Copolymers mit einem Polyepoxid sowie ein Reaktionsprodukt aus einem Polyurethan-Prepolymer und einem Polyphenol oder Aminophenol. Als Thixotropiermittel werden in dieser Schrift unter anderem konventionelle hydrophobe Kieselsäuren vorgeschlagen. Diese Zusammensetzungen sollen sich als Strukturklebstoffe mit guter Tieftemperatur-Schlagfestigkeit eigenen, es wird offenbart, dass Verklebungen mit derartigen Zusammensetzungen auch bei tiefen Temperaturen eine sehr große Schlagschälarbeit aufweisen würden, so dass sich derartige Strukturverklebungen für Crash-resistente Strukturen im Fahrzeugbau verwenden lassen.

WO 2004/081076 beschreibt polymere Zusammensetzungen, die mindestens ein Epoxidharz enthalten sollen, sowie mindestens ein Copolymer mit gegenüber Epoxidharzen reaktiven Gruppen und einer Glasübergangstemperatur von -20°C oder weniger, sowie Nanoteilchen mit einer mittels Neutronenkleinwinkelstreuung gemessenen mittleren Teilchengröße dₘₐₓ von 5 bis 150 nm. Diese Zusammensetzungen sollen sich zur Herstellung von Klebstoffen, Verbundwerkstoffen, Coatings und Vergussmassen eigenen, die verbesserte mechanische Eigenschaften wie verbesserte Schlagzähigkeit aufweisen sollen. Als Nanoteilchen werden Siliciumdioxide, Carbonate und Montmorillonit vorgeschlagen, wobei weiterhin vorgeschlagen wird die Siliciumdioxidteilchen, wie sie in der WO 02/083776 offenbart sind mit hydrolisierbaren und nicht hydrolisierbaren Silanen an der Oberfläche zu modifizieren. Worin die verbesserte Schlagzähigkeit der vorgeschlagenen Epoxidharz-Zusammensetzungen besteht ist dieser Schrift nicht zu entnehmen.

Aufgabe der vorliegenden Erfindung ist es angesichts dieses Standes der Technik, reaktive Klebstoffe der eingangs genannten Art dahingehend weiter zu verbessern, dass sie neben ausreichender Flexibilität und erhöhter Schälfestigkeit auch bei tiefen Temperaturen gute Eigenschaften wie niedrige, lagerstabile Viskosität für die Applikation aufweisen und zusätzlich eine gute Alterungsstabilität der mit diesen reaktiven Klebstoffen durchgeführten Verklebungen gewährleisten. Insbesondere soll auch die Schälfestigkeit bei tiefen Temperaturen und schlagartiger Belastung einen möglichst hohen Wert aufweisen, damit strukturell geklebte Bauteile auch im Falle eines Unfalls (Crash-Verhalten) den modernen Sicherheitsanforderungen im Fahrzeugbau entsprechen.

Die erfindungsgemäße Lösung der Aufgabe ist den Ansprüchen zu entnehmen. Sie besteht im Wesentlichen in der Bereitstellung von Zusammensetzungen, die
a) mindestens ein bei Raumtemperatur flüssiges Epoxidharz auf Basis von Diglycidylethern des Bisphenols A,
b) mindestens ein Copolymer mit einer Glasübergangstemperatur kleiner gleich -30°C und gegenüber Epoxiden reaktiven Gruppen oder ein Umsetzungsprodukt des Copolymeren mit einem stöchiometrischen Überschuß an Epoxidverbindungen mit mindestens 2 Epoxi-Gruppen pro Molekül,
c) mindestens einen wärmeaktivierbaren Härter und/oder Beschleuniger und
d) mindestens ein Organosilan-modifiziertes Siliciumdioxid-Sol enthalten.

Dabei können die Aufbaukomponenten a), b) und c) jeweils auch Gemische von Verbindungen der angegebenen Art sein.

Als Epoxidharze für die Komponente a) bzw. für die Epoxid-Adduktbildung mit der Komponente b) oder zur Abmischung der Komponente b) eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, 1,5-Pentandiol, 1,6-Hexandiol oder Trimethylolpropan ab.

Polyglycidylether von Diaminen können beispielsweise durch Dehydrochlorierung von Reaktionsprodukten von Epichlorhydrin mit Aminen, die mindestens zwei Aminogruppen enthalten, hergestellt werden. Beispiele für Amine, die solchen Epoxidharzen zugrunde liegen, sind aliphatische Amine, wie Hexamethylendiamin, cycloaliphatische Amine, wie 1,4-Diaminocyclohexan, Bis-aminomethylen-1,4-cyclohexan, aromatische Amine wie Bis-(4- aminophenyl)-methan, Bis-(4-aminophenyl)-ether, Bis(4-aminophenyl)-sulfon, 4,4'-Diaminobiphenyl oder 3,3'-Diaminobiphenyl, oder araliphatische Amine, wie m-Xylylendiamin. Weiterhin können auch Poly-(N-glycidyl)- verbindungen wie Triglycidylisocyanurat, N,N'-Diglycidylderivate von Cycloalkylenharnstoffen, wie von Ethylenharnstoff oder von 1,3- Propylen harnstoff, und N,N'-Diglycidylderiatve von Hydantoinen, wie von 5,5-Dimethylhydantoin mitverwendet werden.

Weitere geeignete Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Insbesondere für die Adduktbildung der Komponente b) werden bei Raumtemperatur flüssige Epoxidharze eingesetzt, die in der Regel ein Epoxid-Äquivalentgewicht von 150 bis etwa 220 haben, besonders bevorzugt ist ein Epoxi-Äquivalentgewichtbereich von 182 bis 192.

Beispiele für die Copolymeren der Aufbaukomponente b) sind 1,3-Dienpolymere mit Carboxylgruppen und weiteren polaren ethylenisch ungesättigten Comonomeren. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itakonsäure, Maleinsäure oder deren niedrere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere b) sind Carboxyl-terminierte Butadienacrylnitrilcopolymere (CTBN), die in flüssiger Form unter dem Handelsnamen Hycar von der Firma Noveon Inc. (früher B. F. Goodrich) angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13 oder 1300 X 15.

Weiterhin können als Aufbaukomponente b) auch die aus der US-A-5 290 857 bzw. aus der US-A-5 686 509 bekannten Kern/Schale-Polymeren eingesetzt werden. Dabei sollen die Kernmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei überwiegend aus Copolymeren aufgebaut, die eine Glasübergangstemperatur von mindestens 60 °C hat. Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden aufgebaut, ggf. mit einem untergeordneten Anteil an Styrol.

Es eignet sich als Aufbaukomponente b) auch aminoterminierte Polyalkylenglycole, insbesondere di- oder trifunktionelle aminoterminierte Polypropylenglykole, Polyethylenglykole oder Copolymere von Propylenglykol und Ethylenglykol. Diese sind auch unter dem Namen "Jeffamin" (Handelsname der Firma Huntsman) bekannt. Weiterhin besonders geeignet sind die aminoterminierten Polyoxytetramethylenglykole, auch Poly-THF genannt. Außerdem sind aminoterminierte Polybutadiene als Aufbaukomponenten geeignet. Die animoterminierten Polyalkylenglycole oder Polybutadiene haben Molekulargewichte zwischen 400 und 5000. Gegebenenfalls können die animoterminierten Polyalkylenglycole oder Polybutadiene mit einem stöchiometrischen Überschuß an Epoxidverbindungen mit mindestens 2 Epoxi-Gruppen pro Molekül umgesetzt werden, bevor sie den übrigen Epoxi-Bestandteilen zugemischt werden. Gegebenenfalls kann die Aufbaukomponente b) auch noch weitere flexibilisierend wirkende Copolymerzusätze mit enthalten, beispielhaft erwähnt seien hier Acrylat-Gruppen terminierte Urethanflexibilisierungsmittel, die ggf. mit Bisphenol A basierten Epoxidharzen modifiziert sein können.

Die Festigkeit des reaktiven Klebstoffes im erkalteten Zustand, d. h. insbesondere nach dem Auftragen auf das zu fügende Substrat, aber vor der Aushärtung, hängt vom Aufbau und damit Molekulargewicht der Komponente b) ab sowie vom Verhältnis von festem Epoxidharz zu flüssigem Epoxidharz. Je höher das Molekulargewicht des Copolymers bzw. das Umsetzungsprodukt des Copolymers mit einer Epoxidverbindung mit mindestens 2 Epoxi-Gruppen pro Molekül b) ist und je größer der Anteil an festem Epoxidharz in der Zusammensetzung ist, um so härter ist der erkaltete, amorphe oder semikristalline Klebstoff.

Als thermisch aktivierbare oder latente Härter für das Epoxidharz-Bindemittelsystem aus den Komponenten a) und b) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanuguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für die einkomponentigen, hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole.

Ein wesentlicher Bestandteil der erfindungsgemäßen Zusammensetzungen sind Organosilan-modifizierte Siliciumdioxid-Sole. Bei den Organosilan-modifizierten Siliciumdioxid-Solen handelt es sich um Siliciumdioxid-Teilchen mit Teilchengröße zwischen 1 nm und 50 nm, vorzugsweise zwischen 5 nm und 40 nm, die an ihrer Oberfläche organofunktionelle Silane kovalent über mindestens eine Silicium-Sauerstoff-Siliciumbindung gebunden haben. Zusätzlich sind die Organosilan-modifizierten Siliciumdioxid-Sole der vorliegenden Erfindung durch Organosilan-Oligomere modifiziert. Diese Organosilan-Oligomeren haben Molekulargewichte zwischen 300 Dalton und 6000 Dalton, vorzugsweise 300 Dalton und 3000 Dalton (g/mol). Die Molekulargewichte werden dabei als relative Molekulargewichte mit der Hilfe der Gelpermeations Chromatographie (GPC, auch "Size exclusion Chromatographie, SEC genannt) gegen Polystyrol- oder Polymethylmethacrylat-Standards bestimmt. Das erfindungsgemäß zu verwendende Siliciumdioxid-Sol enthält dabei zwischen 40 und 90, vorzugsweise zwischen 50 und 70 Atom-% Silicium-Einheiten als Siliciumdioxid (Silica-Partikel) und zwischen 60 und 10 Atomprozent, vorzugsweise zwischen 30 und 50 Atom-% Silicium-Atome, die organisch gebunden sind. Dabei sind die organisch gebundenen Siliciumatome die Summe aus den Organosilan-Oligomeren und den auf der Oberfläche der Silica-Partikel gebundenen organofunktionellen Silane. Die Bestimmung des Anteils an "anorganischen" Siliciumeinheiten (Silica-Partikel) zu den organisch gebundenen Silicium-Atomen kann dabei entweder aus den Synthese bedingten Edukt-Einwaagen rechnerisch ermittelt werden, vorzugsweise wird sie durch ²⁹Si-MAS-NMR-Spektroskopie (Magic-Angle Spinning Nuclear Magnetic Resonance) ermittelt.

Gegenüber dem Stand der Technik unterscheiden sich die erfindungsgemäß einzusetzenden Organosilan-modifizierten Siliciumdioxid-Sole dadurch, dass die Silica-Partikel im Wesentlichen als diskrete Partikel vorliegen und nicht als aggregierte Teilchen, wie dies bei den konventionellen, ggf. auch Oberflächenmodifizierten, hochdispersen Kieselsäuren der Fall ist. Die hochdispersen Kieselsäuren des Standes der Technik werden in aller Regel durch pyrolytische Verfahren der Hochtemperatur-Hydrolyse hergestellt. Ein typischer Herstellungsweg derartiger pyrogener Kieselsäuren ("fumed silica") ist die Hydrolyse einer flüchtigen Siliciumverbindung in einer Knallgasflamme. Hierbei fällt zwar extrem feinteiliges Siliciumdioxid an, die Primärteilchen aggregieren jedoch zu "Perlenschnüren" einer Vielzahl von Primärteilchen.

Die erfindungsgemäß eingesetzten Organosilan-modifizierten Siliciumdioxid-Sole werden vorzugsweise in einem wässrig/alkoholischen Medium in Gegenwart von solchen organofunktionellen Silanen hergestellt, die ein Aggregieren der Silica-Primärteilchen weitgehend verhindern. Besonders bevorzugte Silane sind hierbei Epoxi-funktionelle Silane mit der allgemeinen Formel

Rₐ¹R_{b}²Si(OR³)_{4-a-b}.

In dieser allgemeinen Strukturformel ist R¹ eine Epoxi-substituierte Alkyl- oder Aralkyl-Gruppe, wobei die Alkyl- oder Aralkyl-Gruppe 4 bis 30 Kohlenstoffatome aufweisen kann, R³ ist eine Alkyl- oder Alkoxy-substituierte Alkylgruppe mit 1 bis 12 Kohlenstoffatomen. R² ist eine Alkylgruppe oder eine alkoxysubstituierte Alkyl-, Aryl- oder Aralkyl-Gruppe mit 1 bis 20 Kohlenstoffatomen, a ist eine ganze Zahl zwischen 1 und 3, vorzugsweise 1 und b ist eine ganze Zahl zwischen 0 und 2, wobei a + b gleich 1, 2 oder 3 ist. Jede R-Gruppe kann eine cyclische, lineare oder verzweigte Gruppe sein.

Die bevorzugt einzusetzenden Epoxi-funktionellen Silane lassen sich durch die nachfolgenden Strukturformeln (1) bis (3) darstellen: 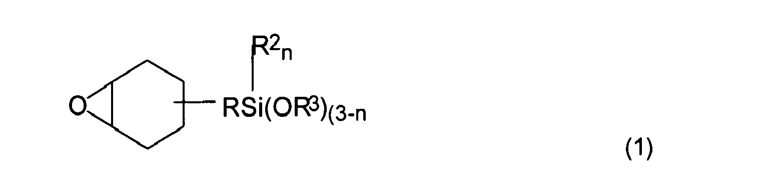 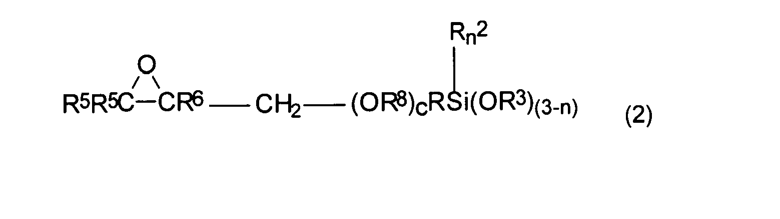 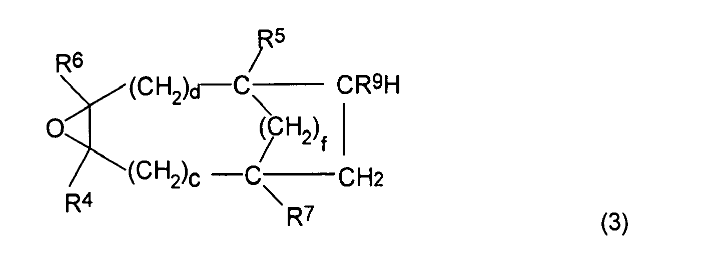 in den vorstehenden Formeln ist
R (CH₂)ₘ und m eine ganze Zahl zwischen 0 und 6;
R ² eine C₁ - C₁₀ Alkyl-Gruppe, ggf. Substituiert mit einer C₁ - C₁₀ Alkoxy- oder einer C₆ - C₁₀ Aryl oder einer C₇ - C₁₀ Aralkyl-Gruppe;
R³ eine C₁ - C₆ Alkyl-Gruppe, ggf. Substituiert mit einer C₁ - C₁₀ Alkoxy-, oder einer C₆ - C₁₀ Aryl- oder einer C₇ -C₁₀ Aralkyl-Gruppe;
R⁴, R⁵ ,R⁶ or R⁷ sind jeweils unabhängig voneinander Wasserstoff oder eine C₁ - C₆ Alkyl-Gruppe;
R⁸ eine C₁ - C₄ Alkylen-Gruppe oder eine C₇ - C₁₀ Aralkylen-Gruppe oder eine C₆ - C₁₀ Arylen-Gruppe und 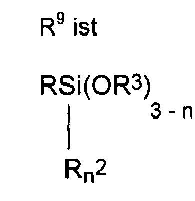 sowie
n ist eine ganze Zahl zwischen 0 und 2, c, d und e sind jeweils 0 oder 1 und f ist eine ganze Zahl zwischen 0 und 2.

Mischungen von Epoxi-Silanen der oben stehenden Formeln können ebenfalls eingesetzt werden.
R² ist vorzugsweise eine substituierte oder umsubstituierte einwertige Kohlenwasserstoff-Gruppe, beispielsweise eine Alkyl-Gruppe, wie Methyl-, Ethyl-, Propyl-, Isobutyl- oder Octyl-Gruppe, eine Alkenyl-Gruppe wie z.B. Vinyl- oder Allyl-Gruppe, eine Aryl-Gruppe wie z.B. Phenyl-, Tolyl- oder Naphtyl-Gruppe, eine Aralkyl-Gruppe, zum Beispiel Benzyl- oder 2-Phenethyl-Gruppe. Alternativ kann in den vorgenannten Kohlenwasserstoff-Gruppen ein oder mehrere Kohlenwasserstoffatom(e) durch Atome oder Gruppen substituiert sein, beispielsweise durch weitere Kohlenwasserstoff-Gruppen, Ether-Gruppen oder Thio-Ether-Gruppen.

R³ sind Alkyl-, Alkoxyalkyl, Aryl- oder Aralkyl-Gruppen wie zum Beispiel Methyl-, Ethyl-, n-Propyl-, n-Buthyl-, n-Hexyl-, n-Heptyl-, n-Octyl-, n-Nonyl-, n-Decyl- oder Cycloalkly-Gruppen wie Cyclopentyl, Cyclohexyl, Cycloheptyl oder Cyclooctyl. Konkrete Beispiele für verzweigte Kohlenwasserstoff-Gruppen für R³ sind Isopropyl, Isobutyl ein sec-Butyl, sec-Amyl-, 4-Methyl-, 2-Pentyl, n-Butoxyethyl, Methoxypropyl, Phenyl, Benzyl oder Ethyl-Phenyl.

R⁴, R⁵, R⁶ oder R⁷ sind Wasserstoffatome oder einwertige Kohlenwasserstoff-Gruppen von 1 bis 6 Kohlenstoffatomen, wie beispielsweise Alkyl-Gruppen (Methyl, Ethyl, Propyl, Isopropyl, n-Butyl und Isobutyl), Alkenyl-Gruppen (Vinyl- oder Allyl-Gruppen) und Aryl-Gruppen wie zum Beispiel die Phenyl-Gruppe.

Konkrete Beispiele für ganz besonders bevorzugte Epoxy-Silane zur Herstellung der Organosilan-modifzierten Siliciumdioxid-Sole sind 2-(3,4- Epoxycyclohexyl)-ethyltriethoxysilan, 2-(3,4- Epoxycyclohexyl)ethyltrimethoxysilan, 4-(Methyldiethoxysilyl)-1,2- epoxycyclohexan, 3-(3,4-Epoxycyclohexyl)propyltri-(isobutoxy)-silan, 3- (2,3-Epoxybutoxy)propyltriethoxysilan, 3- (2,3-Epoxybutoxy)propyltrimethoxysilan, Bicycloheptan-2,3- epoxy-5-(2-triethoxysilyl)ether, 3-Glycidoxypropyltriethoxysilan oder 3-Glycidoxy-propyltrimethoxysilan, oder deren Mischungen.

Zur Organosilan-Modifizierung der Siliciumdioxid-Sole wird dabei soviel der vorgenannten organofunktionellen Silane eingesetzt, dass die modifizierten Siliciumdioxid-Sole 40 bis 90 Atom-% Silicium-Einheiten als Silica-Partikel und 60 bis 10 Atom-% der organisch gebundenen Silicium-Atomen aus den vorgenannten organofunktionellen Silanen aufweisen.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Klebstoffzusammensetzungen gängige weitere Hilfs- und Zusatzmittel wie z. B. Weichmacher, Reaktivverdünner, Rheologiehilfsmittel, Netzmittel, Alterungsschutzmittel, Stabilisatoren und/oder Farbpigmente enthalten vorzugsweise sind die Zusammsetzungen jedoch frei von Weichmachern. Als Rheologiehilfsmittel können z.B. pyrogene Kieselsäuren, Bentone oder fibrillierte oder Pulp-Kurzfasern im Bereich zwischen 0,1 und 5% zugesetzt werden.

Reaktive Verdünner im Sinne dieser Erfindung sind Epoxydgruppen enthaltende, niederviskose Substanzen (Glycidylether oder Glycidylester) mit aliphatischer oder aromatischer Struktur. Diese Reaktivverdünner dienen einerseits zur Viskositätserniedrigung des Bindemittel-Systems oberhalb des Erweichungspunktes, andererseits steuern sie den Vorgelierungsprozess im Spritzguss. Typische Beispiele für erfindungsgemäß einzusetzende Reaktivverdünner sind Mono-, Di- oder Triglycidylether von C₆- bis C₁₄₋Monoalkoholen oder Alkylphenolen sowie die Monoglycidylether des Cashewnuß-Schalenöls, Diglycidylether des Ethylenglycols, Diethylenglycols, Triethylenglycols, Tetraethylenglykols, 1,2-Propylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄-Carbonsäuren oder deren Mischungen. Bevorzugte Formulierungen der erfindungsgemäßen Klebstoff-Zusammensetzungen enthalten:
- 15 bis 70 Gew.-%, vorzugsweise 20 bis 50 Gew.-% eines oder mehrerer bei RT flüssiger Epoxidharz auf Basis Bisphenol A und/oder F,
- 0 bis 20 Gew.-% eines oder mehrerer bei RT fester Epoxidharze auf der Basis Bisphenol A und/oder F,
- 0 bis 10 Gew.-% Polyglycidylester von Polycarbonsäure oder Polyestern,
- 0,5 bis 40 Gew.-%, vorzugsweise 10 bis 30 Gew.-% eines oder mehrerer Copolymerer mit einer Glasübergangstemperatur kleiner oder gleich -30°C oder deren Umsetzungsprodukte mit einem stöchiometrischen Überschuß eines Epoxidharzes,
- 0 bis 10 Gew.-%, vorzugsweise 0,5 bis 8 Gew.-% eines Reaktivverdünners,
- 0,2 bis 10 Gew.-%, vorzugsweise 0,5 bis 8 Gew.-% eines oder mehrerer latenter Härter ggf. zusammen mit katalytisch wirksamen Harnstoffen,
- 0,5 bis 7 Gew.-%, vorzugsweise1 bis 5 Gew.-% eines Organosilan-modifizierten Siliciumdioxid-Sols,
- 0 bis 5 Gew.-%, vorzugsweise 0,1 bis 4 Gew.-% eines oder mehrerer Rheologie-Hilfsmittel (Thixotropier-Mittel),
- 0 bis 15 Gew.-%, vorzugsweise 1 bis 10 Gew.-% an Füllstoffen und/oder Farbpigmenten und ggf. weiterer Hilfs- und Zusatzmittel,
wobei die Gesamtsumme der Bestandteile 100 Gew.-% ergibt.

Die erfindungsgemäßen Klebstoffe lassen sich einerseits als einkomponentige Klebstoffe formulieren, wobei diese sowohl als hochviskose warm applizierbare Klebstoffe formuliert werden können als auch als thermisch härtbare Schmelzklebstoffe. Weiterhin können diese Klebstoffe als einkomponentige vorgelierbare Klebstoffe formuliert werden, im letztgenannten Fall enthalten die Zusammensetzungen entweder feinteilige thermoplastische Pulver wie z. B. Polymethacrylate, Polyvinylbutyral oder andere thermoplastische (Co)polymere oder das Härtungssystem ist so abgestimmt, daß ein zweistufiger Härtungsprozeß stattfindet, wobei der Gelierungsschritt nur eine teilweise Aushärtung des Klebstoffes bewirkt und die Endaushärtung im Fahrzeugbau z. B. in einem der Lackieröfen, vorzugsweise der KTL-Ofen, stattfindet.

Die erfindungsmäßen Klebstoff-Zusammensetzungen zeichnen sich durch eine Vielzahl von vorteilhaften Eigenschaften aus, die sie von den bekannten Strukturklebstoffen des Standes der Technik abhebt:
- Die Klebstoffe eignen sich als hochfeste Strukturklebstoffe, die auf Ölkontaminierten metallischen Substraten appliziert werden können,
- Sie weisen gute Schlagfestigkeiten und Schlagschälfestigkeiten, insbesondere auch bei tiefen Temperaturen auf,
- Klebungen mit den erfindungsgemäßen Klebstoff-Zusammensetzungen sind verschweißbar,
- Die Klebstoff-Zusammensetzungen sind bei Lagerung über einen sehr langen Zeitraum viskositätsstabil,
- Klebungen mit den vorgenannten Klebstoff-Zusammensetzungen weisen eine sehr gute Alterungsbeständigkeit, insbesondere bei hoher Feuchtigkeitsbelastung und im Klimawechseltest auf,
- Die erfindungsgemäßen Klebstoffe haben sehr gute Haftung auf allen im modernen Fahrzeugbau eingesetzten Substraten wie unverzinktem Stahlblech, Stahlblech in allen üblichen Verzinkungsvarianten oder auch Aluminium.

Auch nach Alterung weisen die erfindungsgemäß verklebten Metallteile Festigkeiten oberhalb von 20 MPa auf und haben Schlagfestigkeiten und Schlagschälfestigkeiten, die allen Erfordernissen für Crash-Resistenz der Klebung genügen.

Nachfolgend soll die Erfindung an einigen exemplarischen Ausführungsbeispielen näher erläutert werden.

### Beispiele

Als saurer lonentauscher eignet sich jeder stark saure Kationentauscher, wie z.B.: DOWEX HCR-W2, DOWEX HGR-W2 (Dow), Lewatit Mono Plus S100, Lewatit S1467 (Lanxess).
Als Quelle für nanoskalare, nicht-agglomerierte SiO₂-Partikel in wässriger Lösung können eine Vielzahl von Produkten dienen: Klebosol von Clariant/Rodel, Köstrosol von Chemiewerk Bad Köstritz, Ludox von Grace Davison, Levasil von H.C. Starck, Bindzil und Nyacol von Akzo Nobel/Eka Chemicals.

### Beispiel 1a - lösemittel-arme Variante

### Einsatzstoffe:

- 1000 ml (feuchtes Schüttvolumen) DOWEX HCR-W2, saurer Kationenaustauscher (Dow),
- 2300 ml ammoniakalisches Kieselsol, spez. Oberfläche: 220 m2/g.
- 14850 ml Isopropanol, 98 %,
- 1187 g (=1109 ml) 3-Glycidoxypropyltrimethoxysilan (GLYMO), (ABCR).

### Herstellverfahren:

1000 ml Dowex wurden dem Vorratsgefäß entnommen, in einem Nutschenfilter (D4) mit VE-Wasser gewaschen (2x), am Wasserstrahlvakuum trockengesaugt (5 min) und in ein Becherglas überführt.
Unter Rühren mit Magnetrührfisch wurden innerhalb von 15 min portionsweise 2300 ml Kieselsol dazugegeben.
Es wurde 15 min weitergerührt (pH-Kontrolle: pH=2) und anschließend über eine Glasfritte (D1, Trockenziehen am Wasserstrahlvakuum) der Ionentauscher abfiltriert.
Ca. 1,5 kg GLYMO wurden in einen Glaskolben eingefüllt und die verwendete elektronische Dosierpumpe kalibriert.
14850 ml Isopropanol und 1974 g saures Kieselsol (enthält 592 g SiO₂) wurden im 20l Doppelmantelreaktor mit Edelstahlheiz-schlangen vorgelegt und durch einen Thermostaten mit Diethylenglykol unter Rühren (Impellerglasrührer, 4fach) auf 60 °C aufgeheizt.
Innerhalb von 2,0 h (Dosierpumpe) wurden 1109 ml (1187 g, 5 mol, 3fache Bedeckung bezogen auf Kieselsol- Oberfläche) Silan zugetropft.
Über Nacht wurde bei 60 °C weitergerührt.
Das Isopropanol/Wasser- Azeotrop wurde unter vermindertem Druck abdestilliert. T_{Thermostat} (Soll) = 60 °C.
Der Druck wurde schrittweise von 300 mbar auf 60 mbar Enddruck reduziert.
Erhalten werden 1458 g eines hoch-viskosen, gelartigen aber fließfähigen Produktes.
Analytik: Isopropanol-Gehalt: 8,3 Massen-%, Epoxid-Zahl nach Jay: 3,8 Massen-%, Wasser-Gehalt (Karl-Fischer): 1,3 Massen-%.

### Beispiel 1b - lösemittel-haltige Variante

### Herstellung des Organosilan-modifizierten Siliciumdioxid-Sols

### Einsatzstoffe:

- 32 ml (feuchtes Schüttvolumen) DOWEX HCR-W2, saurer Kationenaustauscher (Dow).
- 150 g wässriges Kieselsol, spez. Oberfläche 220 m2/g, ammoniakalisch stabilisiert.
- 1100 ml Isopropanol.
- 86 g Glycidoxypropyltrimethoxysilan.

### Herstellverfahren

Der lonentauscher wurde dem Vorratsbehälter entnommen und in einer Fritte am Wasserstrahlvakuum mit Wasser gespült, bis das Filtrat farblos ist und trockengesaugt.

32 ml DOWEX HCR-W2 wurden in ein Becherglas vorgelegt. Unter Rühren wurden innerhalb von 15 min 150 g der wässrigen Dispersion dazugegeben. Es wurde 15 min weitergerührt und anschließend über eine grobe Filterfritte (Vakuum) der Ionentauscher abfiltriert. Es wurde darauf zu geachtet, dass der pH in der Lösung unter 3 blieb.

1100 ml Isopropanol wurden in einem 2l Kolben vorgelegt und 144 g (enthält 43.2 g Si02 = 0.72 mol = 20.2 g Si), saure Dispersion durch einen feineren Filter zugegeben.

Die Mischung wurde im Ölbad unter Rühren auf 60 °C aufgeheizt (Temperaturkontrolle: +/- 3°C).
Innerhalb von 2 h wurden 86 g (80.37 ml, 0.34 mol, 9.5 g Si) Silan zudosiert (Dosierpumpe) und anschließend 2.5 h bei 60 °C Rühren gelassen. Gesamtmasse: 1094 g.

Das Isopropanol/Wasser-Azeotrop wurde am Rotationsverdampfer abdestilliert (60 °C, 210 U/min; Starten mit Drücken von 350 mbar; dann Absenken auf 150 mbar) bis in der Lösung ein Wirkstoffanteil von 60 Massen-% erreicht sind. Während der Destillation trübte die Lösung ein, um gegen Ende der Destillation wieder aufzuklaren. Es wurde eine fast wasserklare Lösung erhalten.

Erhalten wurden 0.2 kg des Organosol (Epoxid-Zahl nach Jay: 2.7 Massen-%, Wassergehalt (Karl-Fischer): 2,5 Massen-%.

### Beispiele für Klebstoff-Zusammensetzungen

In einem evakuierbaren Laborkneter wurden die nachfolgend aufgeführten Klebstoff-Zusammensetzungen durch Mischung der einzelnen Bestandteile unter Vakuum zur Entgasung hergestellt, dabei sind die angegebenen Mengen Gew.-Teile.

| | Beispiel 2 | Beispiel 3 | Vergleich |
|---|---|---|---|
| Flüssiger Diglycidylether des Bisphenol A | 22,92 | 22,92 | 22,92 |
| Flüssiger Diglycidylether des Bisphenol F | 8,3 | 8,3 | 8,3 |
| Fester Diglycidylether des Bisphenol A | 13,81 | 13,81 | 13,81 |
| Mischung flexibilisierender Epoxyharze¹⁾ | 27 | 27 | 27 |
| CTBN Hycar 1300-13 | 1,82 | 1,82 | 1,82 |
| Dicyandiamid | 4,53 | 4,53 | 4,53 |
| Fenuron | 0,2 | 0,2 | 0,2 |
| Mischung von Füllstoffen ²⁾ | 6,7 | 5,4 | 4,9 |
| Mischung von Rheologie-Hilfsmitteln ³⁾ | 1,65 | 1,65 | 1,65 |
| Rheologie-Hilfsmitel Cabosil TS 720 | 1,75 | 1,75 | 1,75 |
| Organosilan-modifiziertes SiO₂-Sol (Bsp.1 a) | 1,8 | 0,5 | 0 |
| Kern/Schale Copolymer mit T_{g} <-30°C ⁴⁾ | 4,3 | 4,3 | 4,3 |
| Mischung von Reaktivverdünnern | 4,72 | 4,72 | 4,72 |
| Antioxydans | 0,5 | 0,5 | 0,5 |
| | | | |
| Zugscherfestigkeiten⁵⁾ [Mpa] | | | |
| H0 mini | 39,0 (c) | 36,6 (c) | 37,8 (c) |
| H0 Maxi | 41,5 (c) | 40,8 (c) | 40,0 (c) |
| H7 mini | 27,4 (50% a/c) | 29,8 (25% a/c) | 26,6 (40% a/c) |
| H7 Maxi | 26,2 (50% a/c) | 29,0 (25% a/c) | 26,0 (40% a/c) |
| H14 mini | 23,7(90% a/c) | 27,6 (30% a/c) | 18,5 (25% a/c) |
| H14 Maxi | 24,2 (50% a/c) | 26,0 (40% a/c) | 20,3 (50% a/c) |
| | | | |
| Sehälfestigkeit⁶⁾ [N/mm] | | | |
| H0 mini | 11680 | 10160 | 9460 |
| H0 Maxi | 12320 | 10720 | 10300 |
| | | | |
| Sehlagarbeit⁷⁾ [J] | | | |
| H0 mini | 21 | 28 | 26 |

| | | | |
|---|---|---|---|
| ¹⁾ Mischung aus estermodifizierten, elastomermodifizierten, urethan/acrylatmodifizierten und aminoterminierten-Polyoxypropylen-modifizierten Epxidharzen ²⁾ Bestandteile: Calciumoxid, gefällte Kreide, Eisenoxid, Ruß ³⁾ Mischung aus Schichtsilikaten, PE-Fasern und amorpher Kieselsäure ⁴⁾ gemäß US 5,290,857 ⁵⁾ Zugscherfestigkeit nach D41 1108G (Peugeot, Citroen/Renault) an 1,8 mm starken hochfesten, feuerverzinkten Stahlblechen HL 450M (high elastic limit steel, hot dip galvanized) dabei bedeuten c = cohesiver Bruch, a/c = adhesiv/cohesiver Bruch mit Prozentzahl des cohesiven Anteils, H0 = Anfangswert (ohne Alterung), H7 = 7 Tage Cataplasmatest, H14 = 14 Tage Cataplasmatest, Cataplasmatest: "Cataplasma humide" gemäß D 47 1165 Peugeot-Citroen mini = minimale Einbrennbedingungen (30 min 155°C + 30 min 145°C + 30 min 130°C), Maxi = maximaler Einbrenncyclus (30 min 195°C + 40 min 165°C + 40 min 155°C) ⁶⁾ Scherfestigkeit bestimmt nach D41 5263 (Peugeot-Citroen/Renault) ⁷⁾ Schlagarbeit, auch Impact-Test oder Schlagschältest genannt, nach ISO 11343 bei 2 m/s | | | |

Die erfindungsgemäßen Klebstoff-Zusammensetzungen zeichnen sich durch höhere Zugscherfestigkeiten, insbesondere auch durch besseres Verhalten nach Alterungstest unter Feuchtigkeitseinfluß (Cataplasma humide) aus. Sie weisen weiterhin eine höhere Schälfestigkeit gegenüber dem Stand der Technik auf. Fernerhin sind Klebungen mit erfindungsgemäßen Zusammensetzungen besser verschweißbar im Vergleich zu Zusammensetzungen, die entsprechende Mengen an pyrogener Kieselsäure gemäß Stand der Technik enthalten. Zusätzlich sind die erfindungsgemäßen Klebstoffe über die Lagerzeit viskositätsstabiler und haben eine niedrige Applikationsviskosität im Vergleich zu Zusammensetzungen, die ausschließlich pyrogene Kieselsäuren des Standes der Technik in ausreichender Menge enthalten.

## Patentansprüche

1. Einkomponentige, wärmehärtende Klebstoff-Zusammensetzung enthaltend
a) mindestens ein bei Raumtemperatur flüssiges Epoxidharz auf Basis von Diglycidylethern des Bisphenols A,
b) mindestens ein Copolymer mit einer Glasübergangstemperatur kleiner gleich -30°C und gegenüber Epoxiden reaktiven Gruppen oder ein Umsetzungsprodukt des Copolymeren mit einem stöchiometrischen Überschuß an Epoxidverbindungen mit mindestens 2 Epoxi-Gruppen pro Molekül,
c) mindestens einen wärmeaktivierbaren Härter und/oder Beschleuniger,
d) mindestens ein Organosilan-modifiziertes Siliciumdioxid-Sol.

2. Klebstoff-Zusammensetzung nach Anspruch 1, **dadurch gekennzeichnet, dass** das Siliciumdioxid-Sol mit mindestens einem Epoxy-funktionellen Silan modifiziert wurde.

3. Klebstoff-Zusammensetzung nach Anspruch 2, **dadurch gekennzeichnet, dass** das Epoxy-funktionelle Silan ausgewählt wird aus Verbindungen der Formeln (1) bis (3) 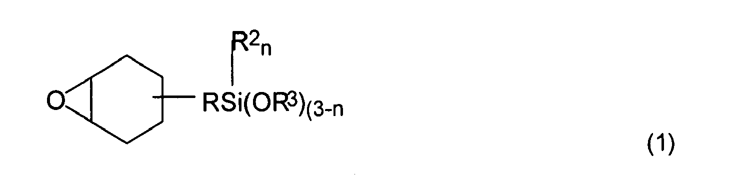 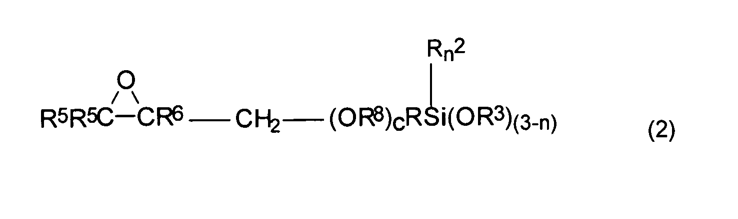 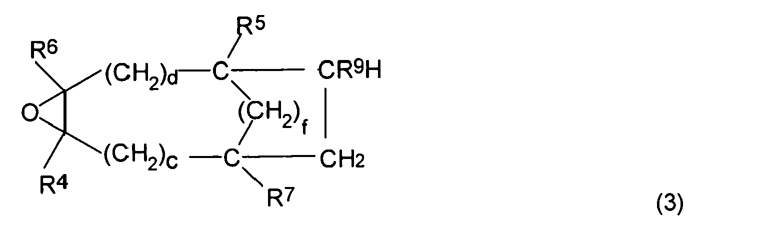 wobei
R (CH₂)ₘ und m eine ganze Zahl zwischen 0 und 6 ist;
R ²eine C₁ -C₁₀ Alkyl-Gruppe, ggf. Substituiert mit einer: C₁ -C₁₀ Alkoxy- oder einer C₆ -C₁₀ Aryl oder einer C₇ -C₁₀ Aralkyl-Gruppe ist;
R³eine C₁ -C₆ Alkyl-Gruppe, ggf. Substituiert mit einer C₁ - C₁₀ Alkoxy-, oder einer C₆ - C₁₀ Aryl- oder einer C₇ - C₁₀ Aralkyl-Gruppe ist;
R⁴ , R⁵ , R⁶ oder R⁷ sind jeweils unabhängig voneinander Wasserstoff oder eine C₁ - C₆ Alkyl-Gruppe;
R⁸ eine C₁ - C₄ Alkylen-Gruppe oder eine C₇ - C₁₀ Aralkylen-Gruppe oder eine C₆ - C₁₀ Arylen-Gruppe ist; und
R⁹ 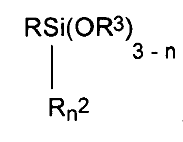 ist sowie
n eine ganze Zahl zwischen 0 und 2 ist, c, d und e jeweils 0 oder 1 sind und f eine ganze Zahl zwischen 0 und 2 ist.

4. Klebstoff-Zusammensetzung nach Anspruch 3, **dadurch gekennzeichnet, dass** Mischungen der Epoxy-funktionellen Silane verwendet werden.

5. Klebstoff-Zusammensetzung nach Anspruch 1 bis 4, **dadurch gekennzeichnet, dass** die mittlere Teilchengröße des Siliciumdioxid-Sols zwischen 5 und 100 nm, vorzugsweise zwischen 10 und 25 nm liegt.

6. Klebstoff-Zusammensetzung nach Anspruch 1 bis 5, **dadurch gekennzeichnet, dass** das Siliciumdioxid-Sol 40-90, vorzugsweise zwischen 50 und 70 Atomprozent Silicium-Einheiten als Silica-Partikel und 60-10, vorzugsweise 30 und 50 Atomprozent als organische gebundene Si-Atome aufweist.
